# EUROPÄISCHE PATENTSCHRIFT

(11) **EP 0 311 956 B1**
(45) Veröffentlichungstag und Bekanntmachung des Hinweises auf die Patenterteilung: **29.12.1993**
(21) Anmeldenummer: 88116794.4
(22) Anmeldetag: 10.10.1988
(51) Int. Cl.: H04Q 3/52

(54) **Breitbandsignal-Koppeleinrichtung**
Coupling device for broadband signals
Dispositif de couplage pour signaux large bande

(30) Priorität: 14.10.1987 DE 3734824
(43) Veröffentlichungstag der Anmeldung: 19.04.1989
(73) Patentinhaber: SIEMENS AKTIENGESELLSCHAFT, 80333 München (DE)
(72) Erfinder: Hofmann, Rüdiger, Dr., D-8031 Gilching (DE)

(56) Entgegenhaltungen:
- EP-A- 0 238 834
- FR-A- 2 412 982
- US-A- 4 549 100
- SIEMENS FORSCHUNGS- UND ENTWICKLUNGS- BERICHTE, Band 4, Nr. 4, 1975, Berlin, DE; WOTRUBA: "A large-scale intergrated memory circuit using single-transistor cells with a density of 1600 bit/mm2 in N-Silicon Gate Technology"

## Beschreibung

Neuere Entwicklungen der Fernmeldetechnik führen zu diensteintegrierenden Nachrichtenübertragungs- u. -vermittlungssystemen für Schmalband- und Breitband-Kommunikationsdienste, die als Übertragungsmedium im Bereich der Teilnehmeranschlußleitungen Lichtwellenleiter vorsehen, über die sowohl die Schmalbandkommunikationsdienste, wie insbesondere 64-kbit/s-Digital-Telefonie, als auch Breitbandkommunikationsdienste, wie insbesondere 140-Mbit/s-Bildtelefonie, geführt werden, wobei aber in den Vermittlungsstellen (vorzugsweise gemeinsame Steuereinrichtungen aufweisende) Schmalbandsignal-Koppeleinrichtungen und Breitbandsignal-Koppeleinrichtungen nebeneinander vorgesehen sind (DE-PS 24 21 002).

Im Zusammenhang mit einer Breitbandsignal-Zeitmultiplex-Koppeleinrichtung, deren Koppelpunkte im Zeitmultiplex jeweils für eine Mehrzahl von Verbindungen genutzt werden, ist es bekannt, jeweils zwei Leitungen mit Hilfe eines Gatterelements zu verbinden, das von einer als bistabiles D-Kippglied ausgebildeten, koppelpunktindividuellen Speicherzelle ein- und ausgeschaltet wird, wobei diese koppelpunktindividuelle Speicherzelle, deren Clock-Eingang ein entsprechendes Taktsignal zugeführt wird, in nur einer Koordinatenrichtung, und zwar an ihrem D-Eingang, angesteuert wird (Pfannschmidt: "Arbeitsgeschwindigkeitsgrenzen von Koppelnetzwerken für Breitband-Digitalsignale", Diss., Braunschweig 1978, Bild 6.7, ferner Bild 6.4). In Anbetracht eines bei einer Bitrate von 140 Mbit/s erreichbaren Zeitmultiplexfaktors von etwa 4 bis 8 und der dabei erforderlichen aufwendigen Schaltungstechnologie werden derzeit allerdings zur Vermittlung von Breitbandsignalen reine Raumkoppeleinrichtungen bevorzugt, in denen die über die einzelnen Koppelpunkte durchgeschalteten Verbindungen allein räumlich voneinander getrennt sind.

Eine reine Breitbandsignal-Raumkoppelanordnung kann als eine mit Eingangsverstärkern und Ausgangsverstärkern versehene Koppelpunktmatrix in C-MOS-Technik ausgebildet sein, in deren Koppelpunkten die Koppelelemente jeweils von einer decodergesteuerten, koppelpunktindividuellen Halte-Speicherzelle gesteuert werden, wobei die Koppelelemente jeweils als C-MOS-Transfergate (C-MOS-Transmissionsgate) ausgebildet sind (ISS'84 Conference Papers 23C1, Fig.9); die koppelpunktindividuellen Halte-Speicherzellen eines reinen Raumkoppelvielfachs können von einem Zeilendecoder und von einem Spaltendecoder her jeweils über eine zeilen- bzw. spaltenindividuelle Ansteuerleitung in zwei Koordinaten angesteuert werden (Pfannschmidt, a.a.O., Bild 6.4).

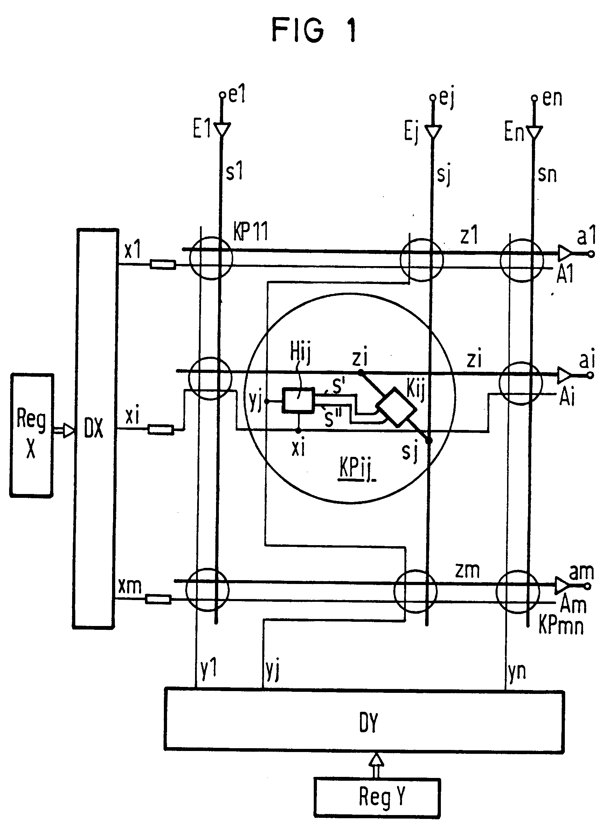

In einer Breitbandsignal-Raumkoppeleinrichtung mit einer Koppelpunktmatrix in FET-Technik können die Koppelelemente mit mit der Drain-Source-Strecke zwischen einer Matrix-Eingangsleitung und einer Matrix-Ausgangsleitung liegenden n-Kanal-Transistoren (s.a. ISS'84 Conf.Papers 31.C.3, Fig.12) gebildet sein, die jeweils von einer durch zwei Ansteuerdecoder in zwei Koordinaten angesteuerten, koppelpunktindividuellen Speicherzelle mit zwei kreuzgekoppelten Inverterschaltungen gesteuert werden, deren eine eingangsseitig mit dem zugehörigen invertierenden Decoderausgang des einen Ansteuerdecoders über einen ersten n-Kanal-Transistor verbunden ist und deren andere eingangsseitig mit dem zugehörigen nichtinvertierenden Decoderausgang desselben Ansteuerdecoders über einen zweiten n-Kanal-Transistor verbunden ist, wobei beide n-Kanal-Transistoren ihrerseits an ihrer Steuerelektrode mit dem Ausgangssignal des zugehörigen Decoderausgangs des anderen Ansteuerdecoders beaufschlagt sind (Rev. ECL 25(1977)1-2, 43...51, Fig.1; IEEE J. of Solid-State Circuits SC-9(1974)3, 142 ...147, Fig.1(a); Electronics and Communications in Japan, 53-A(1970)10, 54...62, Fig.5(b); EP-A-0 073 920, FIG 4). Jedes Umsteuern (Umschreiben) einer solchen bekannten Speicherzelle erfordert das Einprägen eines Schreibstromes bestimmter Größe für eine bestimmte Zeit, was entsprechende Schreibverlustleistungen und Umschreibdauern mit sich bringt.

Die Erfindung stellt sich demgegenüber die Aufgabe, einen Weg aufzuzeigen, wie in einer Breitband-Koppeleinrichtung die einzelnen koppelpunktindividuellen Speicherzellen in einer besonders zweckmäßigen, mit geringen Schreibverlustleistungen und kurzen Umschaltzeiten verbundenen Weise realisiert werden können.

Die Erfindung betrifft eine Breitbandsignal-Koppeleinrichtung mit einer Koppelpunktmatrix in FET-Technik, deren Koppelelemente von in zwei Koordinaten angesteuerten, koppelpunktindividuellen Halte-Speicherzellen gesteuert werden, die jeweils mit zwei kreuzgekoppelten MOS-Inverterschaltungen gebildet sind, deren eine eingangsseitig mit einer das nichtinvertierte Ansteuersignal der einen Ansteuerrichtung führenden Ansteuerleitung über einen ersten Ansteuertransistor verbunden ist und deren andere eingangsseitig mit einer das invertierte Ansteuersignal derselben Ansteuerrichtung führenden Ansteuerleitung über einen zweiten Ansteuertransistor verbunden ist, wobei beide Ansteuertransistoren ihrerseits an ihrer Steuerelektrode mit dem zugehörigen Ansteuersignal der anderen Ansteuerrichtung beaufschlagt sind; diese Raumkoppeleinrichtung ist erfindungsgemäß dadurch gekennzeichnet, daß die Steuerelektroden der beiden Lasttransistoren der beiden kreuzgekoppelten n-Kanal-Inverterschaltungen mit der das invertierte Ansteuer-Taktsignal der genannten anderen Ansteuerrichtung führenden Ansteuerleitung verbunden sind, wobei in weiterer Ausgestaltung der Erfindung auch zwischen die beiden Treibertransistoren der beiden kreuzgekoppelten n-Kanal-Inverterschaltungen und die zugehörige Speisepotentialquelle (Masse) ein zusätzlicher Treibertransistor des gleichen Kanaltyps eingefügt sein kann, dessen Steuerelektrode ebenfalls mit der das invertierte Ansteuer-Taktsignal der genannten anderen Ansteuerrichtung führenden Ansteuerleitung verbunden ist.

Die Erfindung bringt den Vorteil mit sich, in einer Koppelpunktmatrix vorgesehene, jeweils in zwei Koordinatenrichtungen anzusteuernde koppelpunktindividuelle Halte-Speicherzellen in den Ansteuerphasen stromlos machen und somit sonst auftretende Verlustleistungen vermeiden zu können; zugleich sind damit besonders kurze Umsteuerzeiten verbunden.

Weitere Besonderheiten der Erfindung werden aus der nachfolgenden näheren Erläuterung der Erfindung anhand der Zeichnung ersichtlich. Dabei zeigt
- FIG 1: das Schema einer Breitband-Koppeleinrichtung, und
- FIG 2 und FIG 3: zeigen Einzelheiten ihrer schaltungstechnischen Realisierung gemäß der Erfindung.

In der Zeichnung FIG 1 ist schematisch in zum Verständnis der Erfindung erforderlichem Umfange eine Breitbandsignal-Koppeleinrichtung skizziert, an deren zu Spaltenleitungen s1...sj...sn einer Koppelpunktmatrix führenden Eingängen e1...ej...en Eingangstreiberschaltungen E1...Ej...En vorgesehen sind und deren von Zeilenleitungen z1...zi...zm der Koppelpunktmatrix erreichte Ausgänge a1...ai...am mit Ausgangsverstärkerschaltungen A1... Ai...Am versehen sind. Die Koppelpunktmatrix weist Koppelpunkte KP11...KPij...KPmn auf, deren Koppelelemente, wie dies beim Koppelpunkt KPij für dessen Koppelelement Kij weiter ins Einzelne gehend angedeutet ist, jeweils von einer koppelpunktindividuellen Halte-Speicherzelle Hij (beim Koppelpunkt KPij) gesteuert sein können, deren Ausgang s′, s˝ zum Steuereingang des jeweiligen Koppelelements (Kij beim Koppelpunkt KPij) führt.

Die Halte-Speicherzellen ... Hij... werden gemäß FIG 1 durch zwei Ansteuerdecoder, nämlich einen Zeilendecoder DX und einen Spaltendecoder DY, über entsprechende Ansteuerleitungen x1... xi...xm; y1...yj...yn in zwei Koordinaten angesteuert. Dazu mögen, wie dies aus FIG 1 ersichtlich ist, die beiden Ansteuerdecoder DX, DY von Eingangsregistern Reg X, Reg Y her jeweils mit einer einer Matrixreihe (Zeile bzw.Spalte) von Koppelpunkten gemeinsamen Koppelpunktzeilen- bzw. Koppelpunktspalten-Adresse beaufschlagbar sein, auf die hin sie jeweils an der der jeweiligen Koppelpunktreihen-Adresse entsprechenden Ansteuerleitung jeweils ein "1"-Ansteuersignal abgeben. Das Zusammentreffen eines Zeilenansteuersignals "1" und eines Spaltenansteuersignals "1" am Kreuzungspunkt der betreffenden Matrixzeile mit der betreffenden Matrixspalte beim Aufbau einer entsprechenden Verbindung bewirkt dann eine Aktivierung der dort befindlichen Halte-Speicherzelle, beispielsweise der Speicherzelle Hij, mit der Folge, daß das von der betreffenden Halte-Speicherzelle (Hij) gesteuerte Koppelelement, im Beispiel das Koppelelement Kij, leitend wird.

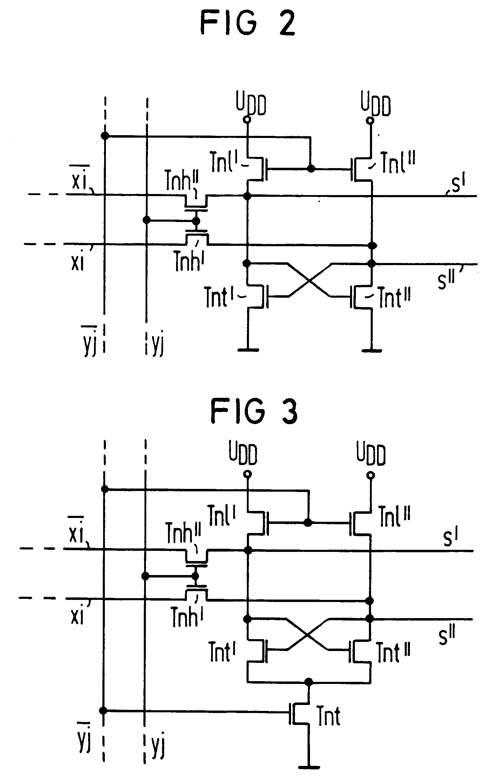

Damit das im Beispiel betrachtete Koppelelement Kij bei einem Abbau der betreffenden Verbindung wieder gesperrt wird, wird wiederum der Ansteuerdecoder DY vom Eingangsregister Reg Y mit der betreffenden Spaltenadresse beaufschlagt, so daß der Spaltendecoder DY wiederum auf seiner Ausgangsleitung yj ein Spaltenansteuersignal "1" abgibt, und zugleich wird der Zeilendecoder DX von seinem Eingangsregister Reg X her beispielsweise mit einer Leeradresse oder mit der Adresse einer Zeile von unbeschalteten Koppelpunkten beaufschlagt, so daß er auf seiner Ausgangsleitung xi ein Zeilenansteuersignal "0" abgibt; das Zusammentreffen von Spaltenansteuersignal "1" und Zeilenansteuersignal "0" bewirkt dann die Rücksetzung der Halte-Speicherzelle Hij mit der Folge, daß das von ihr gesteuerte Koppelelement Kij gesperrt wird. Die in den Koppelpunkten ...KPij... vorgesehenen Koppelelemente ...Kij... können in an sich bekannter Weise realisert sein, wie dies beispielsweise auch aus EP-A-0 219 848, EP-A-0 221 490, EP-A-0 238 834, DE-P 3 631 634 oder DE-P 3 634 154 bekannt ist und daher hier nicht weiter erläutert werden muß. Wie die Halte-Speicherzellen ...Hij... schaltungstechnisch realisiert sein können, wird in FIG 2 und FIG 3 verdeutlicht:
Wie dies aus FIG 2 und FIG 3 ersichtlich ist, sind die in zwei Koordinaten ansteuerbaren, koppelpunktindividuellen Halte-Speicherzellen Hij jeweils mit zwei kreuzgekoppelten N-MOS-Inverterschaltungen Tnl′, Tnt′; Tnl˝, Tnt˝ gebildet, deren eine (Tnl′, Tnt′) eingangsseitig mit einer das nichtinvertierte Ansteuersignal der einen Ansteuerrichtung führenden Ansteuerleitung xi über einen ersten Ansteuertransistor Tnh′ verbunden ist und deren andere (Tnl˝, Tnt˝) eingangsseitig mit einer das invertierte Ansteuersignal derselben Ansteuerrichtung führenden Ansteuerleitung x̅i̅ über einen zweiten Ansteuertransistor Tnh˝ verbunden ist, wobei die beiden n-Kanal-Ansteuertransistoren ihrerseits von einer Ansteuerleitung yj her an ihrer Steuerelektrode mit dem nichtinvertierten Ansteuersignal der anderen Ansteuerrichtung beaufschlagt sind.

In der in FIG 2 skizzierten Halte-Speicherzelle Hij sind die Steuerelektroden der beiden Lasttransistoren Tnl′ und Tnl˝ mit einer das invertierte Ansteuer-Taktsignal der genannten anderen Ansteuerrichtung führenden Ansteuerleitung y̅j̅ verbunden.

Durch das während einer Ansteuerung (Schreibphase) der Halte-Speicherzelle Hij auf der Ansteuer-Taktleitung y̅j̅ auftretende "0"-Signal von z.B. 0 V gesteuert gelangen die beiden Lasttransistoren Tnl′ und Tnl˝ in den Sperrzustand und schalten damit für die Dauer der Schreibphase die Betriebsspannung der kreuzgekoppelten N-MOS-Inverterschaltungen Tnl′, Tnt′; Tnl˝, Tnt˝ ab, so daß die kreuzgekoppelten N-MOS-Inverterschaltungen stromlos sind. Zugleich wird während der Ansteuerphase die Halte-Speicherzelle Hij durch das auf der Ansteuerleitung xi nichtinvertiert und auf der Ansteuerleitung x̅i̅ invertiert auftretende Ansteuersignal in den diesem Ansteuersignal entsprechenden Schaltzustand gesetzt; in dem so während der Schreibphase voreingestellten Schaltzustand verbleibt die Halte-Speicherzelle Hij, wenn danach mit Beendigung der Schreibphase auf der Ansteuerleitung yj statt eines die Ansteuertransistoren Tnh′, Tnh˝ in den Leitzustand steuernden "1"-Signals (+5V) wieder ein die Ansteuertransistoren sperrendes "0"-Signal (0 V) auftritt und umgekehrt auf der Ansteuerleitung y̅j̅ wieder ein "1"-Signal, so daß die N-MOS-Inverterschaltungen wieder stromführend werden.

Die in FIG 3 skizzierte Halte-Speicherzelle Hij stimmt insoweit mit derjenigen gemäß FIG 2 überein; zusätzlich ist zwischen die beiden n-Kanal-Treibertransistoren Tnt′ und Tnt˝ und die zugehörige Speisepotentialquelle (Masse) ein zusätzlicher Treibertransistor Tnt desselben Kanaltyps eingefügt, dessen Steuerelektrode ebenfalls mit der das invertierte Ansteuer-Taktsignal der genannten anderen Ansteuerrichtung führenden Ansteuerleitung y̅j̅ verbunden ist. Die Halte-Speicherzelle Hij gemäß FIG 3 arbeitet dann zunächst wieder analog zur Halte-Speicherzelle gemäß FIG 2; zusätzlich gelangt während einer Ansteuerung (Schreibphase) der Halte-Speicherzelle Hij, durch das auf der Ansteuerleitung y̅j̅ auftretende "0"-Signal von z.B. 0 V gesteuert, auch der zusätzliche Treibertransistor Tnt in den Sperrzustand und schaltet damit auch seinerseits für die Dauer der Schreibphase die Betriebsspannung der kreuzgekoppelten N-MOS-Inverterschaltungen Tnl′,Tnt′; Tnl˝,Tnt˝ ab, so daß die kreuzgekoppelten Inverterschaltungen stromlos sind. Zugleich wird während der Ansteuerphase die Halte-Speicherzelle Hij durch das auf der Ansteuerleitung xi nichtinvertiert und auf der Ansteuerleitung x̅i̅ invertiert auftretende Ansteuersignal in den diesem Ansteuersignal entsprechenden Schaltzustand gesetzt, in welchem die so während der Schreibphase voreingestellte Halte-Speicherzelle Hij verbleibt, wenn danach mit Beendigung der Schreibphase auf der Ansteuerleitung y̅j̅ wieder ein "1"-Signal (+5V) auftritt und der zusätzliche Treibertransistor Tnt wieder leitend wird.
Die vollständige Abtrennung der beiden kreuzgekoppelten N-MOS-Inverterschaltungen Tnl′, Tnt′; Tnl˝, Tnt˝ von beiden Speisespannungsklemmen (U_{DD} und Masse) läßt dabei eine besonders kurze und zugleich dennoch sichere Ansteuerphase (Schreibphase) der Halte-Speicherzelle Hij zu.

Neben der Komplementärsignal-Ansteuerung der Halte-Speicherzelle Hij über die beiden Ansteuerleitungen xi, x̅i̅ der einen Ansteuerrichtung findet gemäß FIG 2 und FIG 3 über die beiden Ansteuerleitungen yj, y̅j̅ auch eine Komplementärsignal-Taktung der Halte-Speicherzelle mit dem nichtinvertierten und dem invertierten Ansteuer-Taktsignal der anderen Ansteuerrichtung statt. In diesem Zusammenhang sei bemerkt, daß das zu einer solchen Komplementär-Ansteuerung benötigte invertierte Ansteuersignal x̅i̅ bzw. y̅j̅, wie dies auch in FIG 2 und FIG 3 angedeutet ist, jeweils auf einer eigenen Leitung durch die Koppeleinrichtung geführt sein kann; alternativ dazu ist es aber auch möglich, das jeweilige invertierte Ansteuersignal (x̅i̅ bzw. y̅j̅) durch Invertierung des jeweiligen nichtinvertierten Ansteuersignals (xi bzw. yj) individuell an jedem Koppelpunkt zu gewinnen, was hier jedoch nicht näher dargestellt werden muß, da dies zum Verständnis der Erfindung nicht erforderlich ist.

## Patentansprüche

1. Breitbandsignal-Koppeleinrichtung mit einer Koppelpunktmatrix in FET-Technik, deren Koppelelemente von in zwei Koordinaten angesteuerten, koppelpunktindividuellen Halte-Speicherzellen (Hij) gesteuert werden, die jeweils mit zwei kreuzgekoppelten MOS-Inverterschaltungen (Tnl′, Tnt′; Tnl˝, Tnt˝) gebildet sind, deren eine (Tnl′, Tnt′) eingangsseitig mit einer das nichtinvertierte Ansteuersignal der einen Ansteuerrichtung führenden Ansteuerleitung (xi) über einen ersten Ansteuertransistor (Tnh′) verbunden ist und deren andere (Tnl˝, Tnt˝) eingangsseitig mit einer das invertierte Ansteuersignal derselben Ansteuerrichtung führenden Ansteuerleitung (x̅i̅) über einen zweiten Ansteuertransistor (Tnh˝) verbunden ist, wobei beide Ansteuertransistoren (Tnh′, Tnh˝) ihrerseits an ihrer Steuerelektrode mit dem zugehörigen Ansteuersignal der anderen Ansteuerrichtung beaufschlagt sind,
**dadurch gekennzeichnet,**
daß die Steuerelektroden der beiden Lasttransistoren (Tnl′; Tnl˝) der beiden kreuzgekoppelten n-Kanal-Inverterschaltungen mit der das invertierte Ansteuer-Taktsignal der genannten anderen Ansteuerrichtung führenden Ansteuerleitung (y̅j̅) verbunden sind.

2. Breitbandsignal-Koppeleinrichtung nach Anspruch 1,
**dadurch gekennzeichnet,**
daß zwischen die beiden Treibertransistoren (Tnt′; Tnt˝) der beiden kreuzgekoppelten n-Kanal-Inverterschaltungen und die zugehörige Speisepotentialquelle (Masse) ein zusätzlicher Treibertransistor (Tnt) des gleichen Kanaltyps eingefügt ist, dessen Steuerelektrode mit der das invertierte Ansteuer-Taktsignal der genannten anderen Ansteuerrichtung führenden Ansteuerleitung (y̅j̅) verbunden ist.

## Claims

1. Broadband signal switching network having a crosspoint matrix in FET technology, the switching elements of which are controlled by crosspoint-specific holding memory cells (Hij) selected with two coordinates which are formed by two cross-coupled MOS inverter circuits (Tnl', Tnt'; Tnl'', Tnt'') in each case, one of which (Tnl', Tnt') is connected on the input side to a selection line (xi) carrying the non-inverted selection signal of the one selection direction via a first selection transistor (Tnh'), and the other of which (Tnl'', Tnt'') is connected on the input side to a selection line (x̅i̅) carrying the inverted selection signal of the same selection direction via a second selection transistor (Tnh''), both selection transistors (Tnh', Tnh'') receiving for their part the associated selection signal of the other selection direction at their control electrode, characterized in that the control electrodes of the two load transistors (Tnl'; Tnl'') of the two cross-coupled n-channel inverter circuits are connected to the selection line (y̅j̅) carrying the inverted selection clock signal of the aforesaid other selection direction.

2. Broadband signal switching network according to Claim 1, characterized in that an additional driver transistor (Tnt) of the same channel type is inserted between the two driver transistors (Tnt'; Tnt'') of the two cross-coupled n-channel inverter circuits and the associated feed potential source (ground), the control electrode of which driver transistor (Tnt) is connected to the selection line (y̅j̅) carrying the inverted selection clock signal of the aforesaid other selection direction.

## Revendications

1. Dispositif de couplage de signaux à large bande comportant une matrice de points de couplage en technique FET, dont les éléments de couplage sont commandés par des cellules de mémoire de maintien (Hij) qui sont propre aux points de couplage, qui sont commandées en deux coordonnées et qui sont formées par respectivement deux circuits inverseurs-MOS (Tnl', Tnt' ; Tnl'', Tnt'') en couplage croisé, dont l'un (Tnl', Tnt') est relié, côté entrée, et par l'intermédiaire d'un premier transistor de commande (Tnh'), à une ligne de commande (xi) véhiculant le signal de commande non inversé de l'une des directions de commande et dont l'autre (Tnl'', Tnt'') est relié, côté entrée, et par l'intermédiaire d'un deuxième transistor de commande (Tnh''), à une ligne de commande (x̅i̅) véhiculant le signal de commande inversé de la même direction de commande, les deux transistors de commande (Tnh'', Tnh'') étant chargés, pour leur part, au niveau de leur électrode de commande, par le signal de commande associé de l'autre direction de commande,
caractérisé en ce que,
les électrodes de commande des deux transistors de charge (Tnl' ; Tnl'') des deux circuits inverseurs à canal n et à couplage croisé, sont reliés à la ligne de commande (y̅j̅) qui véhicule le signal d'horloge de commande inversé de ladite autre direction de commande.

2. Dispositif de couplage de signaux à large bande suivant la revendication 1,
caractérisé en ce que,
entre les deux transistors d'attaque (Tnt' ; Tnt'') des deux circuits inverseurs à canal n à couplage croisé, et les sources de potentiel d'alimentation (Masse) associées, est inséré un transistor de commande supplémentaire (Tnt) de même type, dont l'électrode de commande est reliée à la ligne de commande (y̅j̅) qui véhicule le signal d'horloge de commande inversé de ladite autre direction de commande.
